# EUROPÄISCHE PATENTANMELDUNG

(11) **EP 1 956 368 A1**
(43) Veröffentlichungstag der Anmeldung: **13.08.2008**
(21) Anmeldenummer: 07002739.6
(22) Anmeldetag: 08.02.2007
(51) Int. Cl.: G01N 27/401

(54) **Nano-Hybridgele als Polymer-Elektrolyte**

(71) Anmelder: Hamilton Bonaduz AG, 7402 Bonaduz (CH)
(72) Erfinder: Thrier, Rolf, 8317 Tagelswangen (CH); Züst, Christian, 3012 Bern (CH); Wüst, Dominik, 8200 Schaffhausen (CH); Bühler, Hannes, 8873 Amden (CH)
(74) Vertreter: Dey, Michael

(57) **Zusammenfassung**

Die Erfindung betrifft einen Polymerelektrolyten, der z.B. Bestandteil einer elektrochemischen Referenzelektrode ist und bei potentiometrischen und amperometrischen Sensoren eingesetzt werden kann. Der Polymerelektrolyt umfasst ein Hydrogel das über einen großen pH-Bereich stabil und gegenüber organischen Lösungsmitteln beständig ist. Zusätzlich ist dieses Hydrogel stabil bei erhöhten Temperaturen bis 200 °C. Erzielt wird diese Temperaturstabilität durch Polymerierung von Siloxanen, Silicaten oder Kieselsäure mit Methacrylaten zu sogenannten Hybridmaterialien im Nanomaßstab unter Einhaltung der Nanoscaligkeit (= Nanoverbundwerkstoff).

## Beschreibung

Die Erfindung betrifft einen Polymerelektrolyten, der z.B. Bestandteil einer elektro-chemischen Referenzelektrode ist und bei potentiometrischen und amperometrischen Sensoren eingesetzt werden kann. Der Polymerelektrolyt umfasst ein Hydrogel das über einen großen pH-Bereich stabil und gegenüber organischen Lösungsmitteln beständig ist. Zusätzlich ist dieses Hydrogel stabil bei erhöhten Temperaturen bis 200 °C. Erzielt wird diese Temperaturstabilität durch Hybridisierung organischer Hydrogele mit anorganischen Precursormolekülen zu sogenannten Hybridmaterialien.

Elektrochemische Referenzelektroden in Kombination mit potentiometrischen und amperometrischen Elektroden zur Bestimmung z.B. des pH-Wertes sind bekannt. Meist werden sogenannte Einstabmessketten eingesetzt, bei denen die Referenzelektrode konzentrisch um die innere Messelektrode angeordnet ist. Eine Flüssigkeitsverbindung (Liquid Junction) sorgt für den elektrolytischen Kontakt zwischen dem Referenzelektrolyten im Innern der Referenzelektrode und dem Messmedium. Der Referenzelektrolyt ist üblicherweise eine konzentrierte wässrige Lösung von Kaliumchlorid.

In US 4,959,138 wird ein Referenzelektrolyt aus Polyacrylamid eingesetzt, welcher jedoch in organischen Lösungsmitteln schrumpft und eine erhebliche Instabilität gegenüber hydrolytischen Angriffen z.B. durch Säuren oder Basen aufweist.

In EP 1124132 A1 wird ein acrylamidfreies Hydrogel verwendet, dessen Monomere N,N-Dimethylacrylamid oder 2,3-Dihydroxypropylmethacrylat hydrolytisch wesentlich stabiler sind. Die Lösungsmittelstabilität wurde erreicht, indem die Hydrophilie des Polymers durch Copolymerisation mit hydrophoberen Monomeren der Messmediumspolarität angepasst wurde.

Bei Kontakt mit organischen Lösungsmitteln tauschen (wässrige) Polymergele mit angepasster Hydrophilie lediglich ihr Lösungsmittel aus und es entstehen Gele, welche org. Lösungsmittel als Quellmittel beinhalten, im Gegensatz zu sehr hydrophilen Gelen (z.B. Polyacrylamidgel), welche mit org. Lösungsmitteln nicht zu quellen vermögen und daher bei Kontakt mit letzteren kollabieren (schrumpfen).

Im Falle von poly-N,N-Dimethylacrylamid musste die Hydrophilie des Polymers kaum angepasst werden, da diese Gele in org. Lösungemitteln mit Polaritäten größer als die von Aceton durchaus quellen und somit ohnehin nicht kollabieren. Bei Gelen, bestehend aus poly-2,3-Dihydroxypropylmethacyrylat und hydrophileren Gelen kann die Hydrophilie durch Co-Polymerisation mit hydrophoberen Monomeren, wie Hydroxyethylmethacrylat an die Polarität des lösungsmittelhaltigen Messmediums angepasst werden.

In US2003/0183517A1 wird ein weiteres hydrolytisch stabiles Monomer, nämlich 2-Hydroxy-3-Amino(propyl)methacrylat und Isomerengemische davon als Bestandteil hydrolytisch stabiler und lösungsmittelstabiler Hydrogele in Referenzelektroden beschrieben, welches wiederum durch Co-Polymerisation z.B. mit Hydroxypropylmethacrylat lösungsmittelstabil gemacht wurde.

Weiterhin wurde in WO 2005/073704 N-Acryloylaminoethoxyethanol als Hauptbestandteil hydrolytisch (sauer und basisch) besonders stabiler Hydrogele, eingesetzt als Festelektrolyte in Referenzelektroden, beschrieben.

All diese Gele sind rein organische Hydrogele und weisen die für organische Materialien typische tiefe Temperaturbeständigkeit auf. So vergilben und zersetzen sich Gele aus Poly-N,N-Dimethylacrylamid bereits bei Temperaturen um 135 °C - 140 °C. Weitere Gele, wie z.B. das in US2003/0183517A1 erwähnte poly-Hydroxy-3-Amino-(propyl)methacrylat zeigt schon ab 110 °C nach kurzer Zeit Zersetzungserscheinungen. Folge solcher thermischer Zersetzung ist eine markante Braunverfärbung und letztendlich eine vollständige Zersetzung und/oder ein Schrumpfen oder Auswaschen des Gels, was wiederum zu Unterbrechungen in der potentiometrischen oder amperometrischen Messkette führen kann.

Ein weiterer Nachteil dieser rein organischen Gele ist, dass sie oft in Abhängigkeit der Umgebungsbedingungen (Lösungsmittel, Salzgehalt, pH etc.) quellen oder schrumpfen.

Eine weitere Klasse an Elektrolytgelen bzw. Festelektolyten besteht aus rein anorganischen Gelen. So ist bekannt, dass Innenelektrolyte für die innere Ableitung von potentiometrischen Sensoren teilweise mit "fused silica" zu hochviskosen, physikalisch vernetzten Gelen stark verdickt werden, um Sensoren als "upside-down"-Elektroden auch in umgekehrter Messposition einsetzen zu können, ohne dass der Elektrolyt wegläuft und so die potentiometrische/amperometrische Messkette unterbricht. Solche Gele sind auch als Referenzfestelektrolyte bekannt. So verkauft Rosemount Analytical Elektroden, deren Referenzelektrolyt mit reinen Silikatgelen verdickt wurden. Als besonders vorteilhaft beschreibt Rosemount diese Gele, weil sie sich bei erhöhten Temperaturen nicht verflüssigen und entsprechend auch bei hohen Temperaturen eingesetzt werden können. Ähnliche Elektrolyte werden auch in US2003/0178305A1 (US 6,495,012 B1) beschrieben, wobei da das "fused silica" lediglich als Verdickungsmittel für reduzierten Ausfluss des Referenzelektolyten in einem bedruckten Referenzsystem beschrieben und verwendet wird.

Nachteilig an solchen rein anorganischen Gelen ist deren Brüchigkeit. So kommt es insbesondere bei Temperaturzyklen mit großen Temperaturgradienten vor, dass solche Gele durch die thermische Expansion beim Aufheizen bzw. aufgrund des darauffolgenden Abkühlens beim Schrumpfen Risse bilden. Diese Risse wiederum können ebenfalls zu Messkettenunterbrechungen führen.

Eine dritte Art von Referenz-Hydrogelen sind sogenannte Makro-KompositMaterialien. Dies sind Hybridmaterialien, welche im makroskopischen Bereich z.B. durch Blenden von Polymeren mit Füllstoffen erhalten werden. Diese anorganischen Füllstoffe können kovalent, physikalisch über Van der Vaals-Kräfte oder Wasserstoffbrücken oder gar nicht mit dem organischen Teil des Materials verbunden sein. In letzterem Falle führt dies zu größerer Unordnung und größerer Amorphheit im Material und in der Regel zu reduzierten Materialeigenschaften, die insbesondere bzgl. Temperaturstabilität und der mechanischen Festigkeit noch geringer sein können als die der einzelnen Reinmaterialien.

Bei physikalischer oder kovalenter Anbindung der anorganischen Phase an die organische Phase werden die Eigenschaften des Materials und insbesondere die Festigkeitseigenschaften nur geringfügig verbessert. Nichtsdestotrotz lassen sich die Materialeigenschaften der organischen Materialien und der anorganischen Materialien nicht wirklich mischen, da diese makroskopisch wie eine Kette mit verschiedenen Gliedern aufgebaut ist, deren Eigenschaft durch das schwächste Glied bestimmt wird.

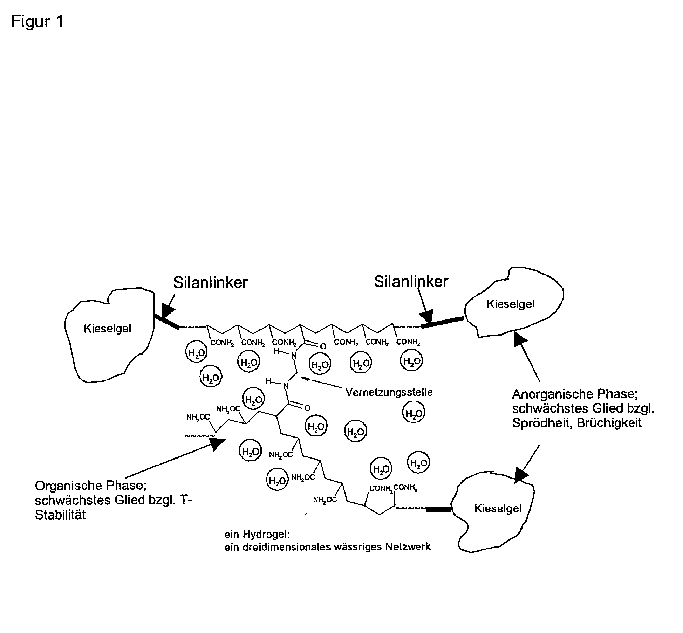

Ein Beispiel für ein Makro-Kompositmaterial ist in EP 1124132 A1 beschrieben, wobei das Kompositmaterial durch Polymerisation von DMA in Anwesenheit von Silicagel (0 - 60µm) erhalten wird. Ein weiteres Beipiel ist das in US2003/0183517 A1 oder WO 2005/073704 A1 beschriebene Makro-Kompositmaterial, dem ebenfalls Silicagel und zusätzlich kurz vor der Polymerisation ein silyliertes Methacylat, z.B. der Silanlinker (Trimethoxysilyl)-propylmethacrylat, zugesetzt wird, um eine Bindung sowohl zwischen dem organischen Gel und den Füllstoffen wie auch eine Bindung zwischen dem organischen Gel und dem umgebenden Elektrodenglasschaft zu erhalten. Dadurch ergeben sich Gele der in Figur 1 dargestellten Art, welche aus Blöcken anorganischen Materials und Blöcken organischen Materials bestehen.

Ein zusätzlicher Nachteil des Silanlinkers (Trimethoxysilyl)propylmethacrylat ist, dass dieses Silylmethacrylat relativ hydrophob ist und in wässrigen Momomerlösungen als Silicon-Fettaugen obenauf schwimmt. Diese Komponente kann demnach nur in entsprechend geringer Menge in diese Art von Festelektrolyten eingearbeitet werden, was für eine einfache Glasanbindungsfunktion des Gels am Elektrodenschaft, wie in WO2005/073704 A1 beschrieben, nicht aber für eine wesentliche Temperaturbeständigkeitserhöhung genügt. Um diesem Umstand Rechnung zu tragen, werden die Monomerlösungen, welche in die Elektroden eingezogen werden, zusätzlich stark dispergiert, um die Silylkomponente in dispergierter/emulgierter Form in der Lösung zu halten. Nichtsdestotrotz ist ein Eintrag von mehr als 0,5 Mol-% an Silylalkylmethacrylat (im Verhälnis zur Gesamtmonomermenge) nicht möglich.

Die Temperaturstabilität dieser Gele ist gegenüber einem rein organischen Gel nur unwesentlich erhöht.

Eine weitere Eigenschaft dieser Makro-Kompositmaterialien ist, dass sie trüb und undurchsichtig sind. Dies rührt daher, dass die einzelnen Phasenteilchen (organisch, anorganisch oder beide) > 400 nm sind und das sichtbare Licht (400 - 700 nm) zu brechen vermögen, welches diffus gestreut wird.

Die der vorliegenden Erfindung zugrundeliegende Aufgabe bestand somit darin, einen Elektrolyten bzw. eine Referenzelektrode bereitzustellen, mit denen die oben beschriebenen Nachteile des Standes der Technik minimiert oder beseitigt werden können. Insbesondere sollte die mangelnde Temperaturstabilität der bekannten organischen Referenzfestelektrolyte verbessert werden, ohne dabei brüchige rein anorganische Gele verwenden zu müssen. Der Elektrolyt bzw. die Referenzelektrode sollen einerseits beständig gegen Verschmutzung sein, andererseits jedoch die Nachteile bekannter Polymerelektrolyte vermeiden. Insbesondere soll der Elektrolyt bzw. die Referenzelektrode auch in Messlösungen mit erhöhter Temperatur zwischen 130 °C und 200 °C noch funktionieren, ohne dass sich hierbei der Festelektrolyt zersetzt oder aufgrund seiner Sprödigkeit reißt.

Diese Aufgabe wird erfindungsgemäß gelöst durch Bereitstellung eines Polymer-Elektrolyten, umfassend ein Hybrid-Polymergel, insbesondere ein Nano-Hybridgel, wobei das Nano-Hybridgel aus mindestens einem anorganischen Precursor und mindestens einem organischen Precursor gebildet ist und einen Wassergehalt von wenigstens 5 Gew.-%, bezogen auf das Gewicht des Nano-Hybridgels aufweist.

Es wurde festgestellt, dass ein solcher Polymer-Elektrolyt eine wesentlich verbesserte Temperaturstabilität aufweist. Die verbesserte Temperaturstabilität wird erfindungsgemäß erreicht, indem organische Precursormoleküle, insbesondere organische Monomere, mit anorganischen Precursorn, z.B. Silanmonomeren oder Polydimethylsiloxanprecursormolekülen, in geeigneter Art zu einem organisch/anorganischen Hybridgel, insbesondere zu einem Nanokomposit, oder Siliconhydrogel vereinigt werden. Ein zusätzlicher Vorteil ist, dass diese Gele wiederum optisch klar bereitgestellt werden können, obschon sie beachtliche Mengen an anorganischen Anteilen enthalten können. Weiterhin ist der Quelldruck von Hybridgelen wesentlich weniger abhängig von den Umgebungsbedingungen als der von rein organischen Gelen.

Erfindungsgemäß wird ein Polymer-Elektrolyt bereitgestellt, welcher eine hohe Temperaturbeständigkeit, insbesondere auch bei Temperaturen > 100 °C, mehr bevorzugt bei Temperaturen > 120 °C, noch mehr bevorzugt bei Temperaturen > 130 °C und am meisten bevorzugt bei Temperaturen > 140 °C aufweist. Es wurde weiterhin festgestellt, dass der erfindungsgemäße Polymer-Elektrolyt bis zu einer Temperatur von 200 °C hitzestabil sein kann. Die Hitzestabilität wird erreicht durch ein Hybrid-Polymergel. Ein solches Hybrid-Polymergel besteht aus anorganischen und organischen Komponenten. Weiterhin umfasst es, da es sich um ein Gel handelt, insbesondere um ein Hydrogel, einen gewissen Gehalt Wasser, nämlich von wenigstens 5 Gew.-%, insbesondere von wenigstens 10 Gew.-%, noch mehr bevorzugt von wenigstens 30 Gew.-% und am meisten bevorzugt von wenigstens 50 Gew.-%, bezogen auf das Gewicht des Hybrid-Polymergels. Es ist auch möglich, dass das Hybrid-Polymergel einen Wassergehalt von bis zu 90 %, insbesondere bis zu 80 % und mehr bevorzugt bis zu 70 % aufweist.

Besonders bevorzugt ist ein Wassergehalt von 60 bis 70 Gew.-%, insbesondere im Hinblick auf die Hydrophilie des Polymers, die Ethanolbeständigkeit, das Salzaufnahmevermögen und/oder das Salzrückhaltevermögen.

Durch die Gestaltung als Hybridmaterial können erfindungsgemäß die günstigen Eigenschaften von organischen Materialien, nämlich Elastizität und Formbarkeit, mit den Vorteilen von anorganischen Materialien, nämlich insbesondere hohe Festigkeit und Hochtemperaturstabilität, vereinigt werden.

Das erfindungsgemäße Nano-Hybridgel weist anorganische und organische Bereiche bzw. Komponenten auf. Diese sind jeweils aus anorganischen bzw. organischen Precursorn gebildet. Ein Precursor ist dabei ein Vorläufermolekül, welches durch Umsetzung mit anderen Vorläufermolekülen oder Komponenten zu einem Bestandteil bzw. einer Komponente des Hybrid-Polymergels wird. Geeignete Precursor sind beispielsweise Monomere, Oligomere oder Präpolymere. Anorganische Precursor weisen dabei mindestens ein anorganisches Element auf, insbesondere Silicium, Titan oder Zirkon.

Bevorzugt weist das im erfindungsgemäßen Polymer-Elektrolyten enthaltene Nano-Hybridgel bzw. das den erfindungsgemäßen Polymer-Elektrolyten bildende Nano-Hybridgel einen Anteil an anorganischen Precursorn von ≥ 5 Gew.-%, insbesondere von ≥ 10 Gew.-%, mehr bevorzugt von ≥ 20 Gew.-%, noch mehr bevorzugt von ≥ 30 Gew.-%, bezogen auf das Gesamtgewicht der Precursor, auf. Dies hat zur Folge, dass die anorganischen Komponenten im Nano-Hybridgel vorzugsweise ≥ 5 Gew.-%, insbesondere ≥ 10 Gew.-%, mehr bevorzugt ≥ 20 Gew.-% und noch mehr bevorzugt ≥ 30 Gew.-% des Nano-Hybridgels ausmachen. Es ist erfindungsgemäß aber auch möglich, noch größere Mengen an anorganischen Komponenten einzubauen und insbesondere bis zu 95 Gew.-%, bevorzugt bis zu 90 Gew.-%, mehr bevorzugt bis zu 80 Gew.-% und noch mehr bevorzugt bis zu 70 Gew.-%.

Der organische Anteil der Nano-Hybridgele beträgt entsprechend insbesondere ≥ 5 Gew.-%, bevorzugt ≥ 10 Gew.-%, mehr bevorzugt ≥ 20 Gew.-%, noch mehr bevorzugt ≥ 30 Gew.-% und insbesondere bis zu 95 Gew.-%, bevorzugt bis zu 90 Gew.-%, mehr bevorzugt bis zu 80 Gew.-% und noch mehr bevorzugt bis zu 70 Gew.-%, bezogen auf das Gesamtgewicht des Nano-Hybridgels. Eine solche Zusammensetzung wird insbesondere erhalten durch einen Anteil an organischen Precursorn von ≥ 5 Gew.-%, bevorzugt von ≥ 10 Gew.-%, mehr bevorzugt ≥ 20 Gew.-%, insbesondere ≥ 30 Gew.-% und bis zu 95 Gew.-%, bevorzugt bis zu 90 Gew.-%, vorzugsweise bis zu 80 Gew.-% und insbesondere bis zu 70 Gew.-%, bezogen auf das Gesamtgewicht der Precursor.

Insbesondere beträgt das Gewichtsverhältnis an organischen Precursorn, beispielsweise organische Monomere zu anorganischen Precursorn, 1 : 20 bis 20 : 1, bevorzugt 1 : 10 bis 10 : 1, mehr bevorzugt 3 : 7 bis 7 : 3.

Die Temperaturstabilität und -festigkeit des resultierenden Gels steigt mit zunehmendem Anteil an anorganischen Komponenten und insbesondere mit zunehmendem Si-Anteil.

Im erfindungsgemäßen Polymer-Elektrolyten können die Hybrid-Polymergelbestandteile durch beliebige Wechselwirkungen miteinander verbunden sein. In einer Ausführungsform werden die anorganischen und organischen Komponenten durch physikalische Wechselwirkungen, beispielsweise durch Van der Waals-Wechselwirkungen oder Wasserstoffbrücken miteinander verbunden. Bevorzugt ist jedoch ein Hybrid-Polymergel, in dem die organischen und anorganischen Komponenten kovalent miteinander verbunden sind. Insbesondere durch die kovalente Verbindung werden Materialien erhalten, deren mechanische und thermische Eigenschaften besonders stabil sind.

Besonders bevorzugt handelt es sich bei dem Nano-Hybridgel um einen Nanoverbundstoff bzw. ein Nanokomposit. In einem Nano-Hybridgel und insbesondere in einem Nanoverbundstoff liegen die organischen und die anorganischen Komponenten jeweils im Nanomaßstab vor, insbesondere mit einer Teilchengröße oder Komponentengröße ≤ 800 nm, mehr bevorzugt in einer Teilchengröße ≤ 600 nm, noch mehr bevorzugt in einer Teilchengröße < 400 nm und am meisten bevorzugt in einer Teilchengröße < 300 nm. Insbesondere durch Vereinigung der beiden Stoffklassen im Nanometermaßstab wird die gewünschte Eigenschaftskombination bei der Hybridisierung erhalten. In den erfindungsgemäß besonders bevorzugten Nano-Hybridgelen liegen insbesondere ≥ 10 Gew.-%, mehr bevorzugt ≥ 30 Gew.-% und noch mehr bevorzugt ≥ 50 Gew.-% der organischen und der anorganischen Komponenten im Nanomaßstab vor. Noch mehr bevorzugt liegen ≥ 70 Gew.-%, insbesondere ≥ 90 Gew.-% und am meisten bevorzugt praktisch alle (≥ 99 Gew.-%) der Komponenten im Nanomaßstab vor. Dabei ist es insbesondere möglich, optisch transparente Gele zu erhalten.

Nanoverbundstoffe werden insbesondere durch Umsetzung von anorganischen und organischen Precursorn erhalten, die jeweils eine Teilchengröße von < 300 nm, insbesondere eine Teilchengröße von < 200 nm aufweisen. Durch das Aneinanderfügen von Precursorn mit solch kleinen Dimensionen kann ein Hybridmaterial erhalten werden, in welchem die Komponenten wiederum im Nanomaßstab vorliegen. Geeignete Precursor sind z.B. organische oder anorganische Präpolymere mit einem Molekulargewicht von ≤ 10000 g/mol, insbesondere ≤ 7000 g/mol. Nano-Hybridgele können aber auch durch Copolymerisation von anorganischen und organischen Monomeren gebildet werden.

Werden hingegen mikroskalige bis grobkörnige Silica-Partikel in organische Materialien eingebaut, entstehen herkömmliche Kompositmaterialien (und nicht Nanokomposite), wie sie z.B. in der Dentaltechnik als Zahnfüllstoffe eingesetzt werden. So sind z.B. die in DE 3405431 A1 erwähnten Polyacrylamidfestelektrolyte klassische Kompositmaterialien, da dort grobkörnige Chromatographiegele (Silica-Xerogele mit Korngrößen im µm-Bereich) eingearbeitet werden. Diese Materialien weisen nicht die optimierten, vereinigten Eigenschaften auf, da das schwächste Glied im Material die Stoffeigenschaften und auch die Temperaturstabilität bestimmt.

Im Gegensatz dazu werden bei Einhaltung der Nanoskaligkeit Monolayer an organischen und anorganischen Polymerketten aufeinandergereiht. Die einzelnen Monolayer (z.B organischer Natur) ihrerseits sind dann so dünn, dass sie nicht mehr "bulk"-Eigenschaften aufweisen und durch Interaktion mit dem nachfolgenden Monolayer (z.B. anorganischer Natur) Mischeigenschaften ausbilden. Dadurch werden erfindungsgemäß Materialien mit hoher Elastizität und gleichzeitig hoher Festigkeit und hoher Temperaturstabilität erhalten. Die so resultierten Materialien sind bevorzugt auch optisch transparent und eignen sich daher auch besonderes für optische Anwendungen.

Bei den Nano-Hybridgelen der erfindungsgemäßen Polymer-Elektrolyte handelt es sich, wie der Name bereits sagt, um Gele, insbesondere um Hydrogele. Solche Gele weisen im Gleichgewichtszustand einen Wassergehalt von wenigstens 5 Gew.-%, insbesondere von 10 bis 70 Gew.-% auf, wodurch gegebenenfalls in Kombination mit einer Salzzugabe die zur Verwendung als Elektrolyt erforderliche Leitfähigkeit erzielt wird.

Um Gele mit einer ausreichend hohen Wasseraufnahmefähigkeit bereitzustellen, weisen die Komponenten der Hybrid-Polymergelmaterialien bevorzugt hydrophile Gruppen auf, die Wasser zurückhalten können. Solche bevorzugten hydrophilen Gruppen sind beispielsweise Hydroxidgruppen. Besonders bevorzugt werden mit hydrophilen Gruppen derivatisierte Vorläufermoleküle eingesetzt, beispielsweise mit Glycerin derivatisierte Moleküle.

Besonders bevorzugte Hybrid-Polymergele für die Erfindung sowie deren Ausgangsmaterialien werden im Folgenden beschrieben.

Als anorganische Komponente bzw. anorganische Precursor sind solche bevorzugt, die Silicium, Titan oder Zirkonium umfassen, insbesondere sind solche bevorzugt, welche Silicium umfassen.

In einer bevorzugten Ausführungsform wird zur Bildung des Hybrid-Polymergels ein anorganischer Precursor der Formel (I):

Si(OR¹)₄

oder der Formel (II):

R²-Si(OR¹)₃

eingesetzt. Dabei handelt es sich bei R¹ und R² bei jedem Auftreten unabhängig um einen organischen Rest, insbesondere um Wasserstoff oder einen C₁-C₃₀-Kohlenwasserstoffrest. Besonders bevorzugt ist der Rest R¹ und R² H oder CₘH₂ₘ₊₁, worin m = 1 bis 30, insbesondere 1 bis 10. Der Kohlenwasserstoffrest kann verzweigt oder unverzweigt, gesättigt, ungesättigt oder aromatisch sein. Weiterhin kann der Kohlenwasserstoffrest nicht substituiert sein. Zur Erhöhung der Hydrophilie und damit zur Verbesserung der Löslichkeit des Precursormoleküls können die Reste R¹ und R² jeweils unabhängig bevorzugt substituiert sein mit hydrophilen Resten, insbesondere mit Hydroxylgruppen. Besonders bevorzugt stellt R¹ oder/und R² einen Glycerinrest dar (-CH₂-CH(OH)-CH₂(OH)). Die Reste R¹ und R² können auch funktionalisiert sein, insbesondere mit funktionellen Gruppen, die eine kovalente Bindung an andere anorganische oder/und organische Precursor erlaubt, beispielsweise eine C=C-Doppelbindung, Hydroxidgruppen, primäre oder sekundäre Amingruppen, Acrylatgruppen oder Thiogruppen.

R² kann die für R¹ angegegebenen Bedeutungen aufweisen, wobei R² bevorzugt ein funktionalisierter Rest ist, der für weitere Derivatisierungen genutzt werden kann, um das Molekül noch hydrophiler und wasserlöslicher zu gestalten. Bevorzugt ist R² mit funktionellen Gruppen funktionalisiert, die eine kovalente Bindung an organische Precursor erlauben.

Bevorzugt werden als anorganische Precursor sogenannte Silane R²-O-Si-(O-R¹)₃ eingesetzt, wie z.B Tetraethoxysilan (TEOS). Diese Stoffe werden bevorzugt eingesetzt in sogenannten Sol-Gel-Reaktionen und bilden bei Anwesenheit von protischen Lösungsmitteln anorganische Gele aus. Das einfachste Beispiel solch eines Silans ist das Wasserglas, dessen Reste R¹ und R² Wasserstoff sind. R² kann ferner ein funktionelle Gruppe (z.B. Allylgruppe oder Acrylatgruppe) enthalten, um polymerisierbare oder derivatisierbare Funktionalität ins anorganische Gel zu bringen. Grundsätzlich können R¹ und R² die oben angegebenen Bedeutungen besitzen.

In einer weiteren bevorzugten Ausführungsform wird ein anorganischer Precursor der Formel (III)

HO-(SiR³₂-O-)ₙ-H

eingesetzt, worin n eine ganze Zahl zwischen 1 und 200, insbesondere zwischen 2 und 100 und noch mehr bevorzugt zwischen 5 und 50 und am meisten bevorzugt zwischen 10 und 30 ist, R³ Wasserstoff oder eine C₁-C₃₀-Kohlenwasserstoffgruppe darstellt, welche gegebenenfalls substituiert sein kann, oder/und Heteroatome enthalten kann. Die Heteroatome sind insbesondere ausgewählt aus O, N, S und P. n wird bevorzugt in Abhängigkeit der Reste R³ so eingestellt, dass der Precursor der Formel (III) eine Molmasse von ≤ 10.000 g/Mol aufweist. R³ ist bevorzugt Wasserstoff oder ein Alkylrest, insbesondere CH₃ oder C₂Hs. Weiterhin bevorzugt enthält einer oder mehrere der Reste R³ jeweils unabhängig eine funktionelle Gruppe, insbesondere eine C=C-Doppelbindung, eine Hydroxidgruppe, eine primäre oder sekundäre Amingruppe oder eine Thiogruppe, an welche anschließend kovalent die organische Komponente gebunden werden kann. Weiterhin bevorzugt enthält R³ hydrophile Gruppen, insbesondere Hydroxylgruppen.

Hier werden bevorzugt derivatisierte Polydialkylsiloxane und insbesondere derivatisierte Polydimethylsiloxane eingesetzt, welche nach Hydrophilierung durch entsprechende Anlagerungsreaktionen hydrophiler Stoffgruppen, insbesondere von Hydroxylgruppen, löslich gemacht werden können. Die hydrophilierten und funktionalisierten Polydimethylsiloxane (mit Molmassen < 5000 - 10000 g/mol → Polymerkettengröße < 400 nm) werden dann anschließend in den organischen Komponenten homogen gelöst und mit diesen zusammen zu einem Siliconhydrogel copolymerisiert.

Beispiele für solche Polydimethylsiloxane, welche entsprechend derivatisiert und funktionalisiert werden können, sind:
DowCorning Fluid 1248 (Mw = 6100); Hydroxyfunktionalisiertes Polydimethylsiloxan
Dow-Corning Fluid 2-8566; primär- und sekundär-aminfunktionalisiertes Polydimethylsiloxan

Siliconhydrogele aus solchen funktionalisierten Polydimethylsiloxanen werden z.B. in US 4605712 als Kontaktlinsenmaterialien beschrieben. Die dort erwähnten Siliconhydrogele weisen allerdings mangelnde Hydrophilie und Wasserrückhaltevermögen auf und müssen noch hydrophiler gestaltet werden, um als Festelektrolyte in Referenzelektroden mit genügendem Elektrolytsalzgehalt (z.B. KCI) verwendet werden zu können.

Geeignete organische Precursor sind grundsätzliche alle Moleküle, welche aus organischen Materialien bestehen, also insbesondere Kohlenwasserstoffe, welche gegebenenfalls Heteroatome, insbesondere O, N, S oder P, aufweisen können. Bevorzugt weisen die organischen Vorläufer ein Molekulargewicht von < 10.000 g/mol auf, wodurch im Nano-Hybridgel eine Nanoscaligkeit erhalten werden kann. Bevorzugt handelt es sich bei den organischen Precursorn um Moleküle, die auch zur Herstellung von organischen Hydrogelen Verwendung finden. Geeignete organische Precursor sind beispielsweise Acrylamide oder/und Methacrylate, die dann zu größeren organischen Einheiten bzw. zu Hybridmaterialien enthaltend organische und anorganische Abschnitte polymerisiert bzw. copolymerisiert werden können. Bevorzugt handelt es sich bei den Acrylamiden oder/und Methacrylaten um N-substituierte Verbindungen, noch mehr bevorzugt um N,N-Dimethylacrylamid, N-(Trishydroxymethyl)-N-methylacrylamid, N-Hydroxymethylacrylamid, N-Hydroxyethylacrylamid, N-Glycerinacrylamid oder Kombinationen davon. Weiterhin bevorzugt sind organische Vorläufer, die hydrophile Gruppen, insbesondere Hydroxylgruppen, und noch mehr bevorzugt mindestens zwei Hydroxylgruppen aufweisen. Ein Beispiel für ein solches Precursormolekül ist 2,3-Dihydroxypropylmethacrylat.

Erfindungsgemäß geeignete Nano-Hybridgele können auf verschiedene Arten hergestellt werden.

Bei einem bevorzugten Herstellungsverfahren erfolgt eine Polymerisation von organischen Monomeren als organischen Precursorn in Anwesenheit von anorganischen Solen als anorganischen Precursorn. Bevorzugt wird als anorganisches Sol ein Siloxansol eingesetzt. Bei diesem Verfahren zur Herstellung von Hybridmaterialien wird keine kovalente Bindung zwischen der anorganischen Komponente, insbesondere der Si-Struktur, und dem organischen Hybridteil gebildet. Das anorganische Netzwerk und das organische Polymer werden vielmehr über Wasserstoffbrückenbindungen zusammengehalten, welche eine makroskopische Phasentrennung verhindern.

In einer weiteren bevorzugten Ausführungsform werden die erfindungsgemäß eingesetzten Hybridmaterialien durch Polymerisierung, insbesondere . Polykondensierung von anorganischen Vorläufern in Gegenwart von Polymerlösungen enthaltend organische Polymere hergestellt. Besonders bevorzugt handelt es sich in dieser Ausführungsform bei den anorganischen Precursorn um Alkoxysiloxane. Besonders geeignet für diesen Herstellungsweg sind Polymerlösungen, welche hydrophile Hydroxylgruppen-haltige Polymere enthalten. Dabei werden Hybridmaterialien gebildet, die starke Wasserstoffbrückenbindungen zwischen dem anorganischen Netzwerk, insbesondere einem Silikonnetzwerk, und dem Polymer, insbesondere einem hydroxylhaltigen Polymer, aufweisen, wobei diese Wasserstoffbrückenbindungen eine Phasenseparierung verhindern und somit zu klaren, homogenen Hybriden im Nanometermaßstab führen. Für dieses Herstellungsverfahren geeignete Polymere sind beispielsweise Polyvinylalkohol, Polyethylenglykole, insbesondere Hydroxy-endständige Polyethylenoxidpolymere, Poly-Hydroxymethylacrylamide, insbesondere lineares Poly-Hydroxymethylacrylamid, pHEMA, insbesondere lineares pHEMA, sowie lineare Polymere, gebildet aus 2,3-Dihydroxypropylmethacrylat und Tris-Hydroxypropylmethacrylat.

Besonders geeignete anorganische Sole sind Glycerin-umgeesterte Silane, insbesondere Glycerin-umgeestertes TMOS, insbesondere mit einem M_{w} von < 10000 g/mol sowie Wasserglassole, insbesondere Polysilikasäure, mit Partikelgrößen < 300 nm.

Ein weiterer bevorzugter Herstellungsweg ist die in situ Polykondensation von anorganischen Precursorn in Gegenwart von Trialkoxysiloxanfunktionalisierten organischen Precursorn. Der organische Precursor kann beispielsweise durch Copolymerisation von organischen Monomeren mit einem Silyl-funktionalisierten organischen Monomer, wie z.B. Tri(oxymethyl) propylsilyl-methacrylat erhalten werden. Bei den anorganischen Precursorn handelt es sich bevorzugt um Wasserglas- oder Alkoxysiloxane. Die Umsetzung erfolgt bevorzugt gemäß folgender Gleichung:

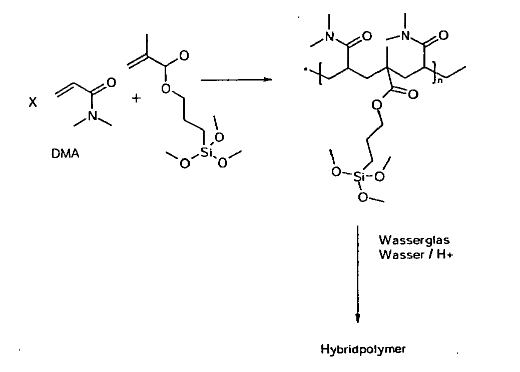

Es besteht auch die Möglichkeit, organische Polymere als Precursor erst nach deren Herstellung mit Siloxan zu funktionalisieren. Dazu können z.B. Hydroxy-endständige Polymere, wie beispielsweise Polyethylenoxide oder Polyvinylalkohole, mit einem Isocyanat-funktionalisierten Alkoxysiloxan umgesetzt werden. Dieses Produkt kann dann anschließend mit Siloxanen oder Wasserglas polykondensiert werden. Ein Beispiel für diese Herstellungsweise ist im Folgenden darstellt:

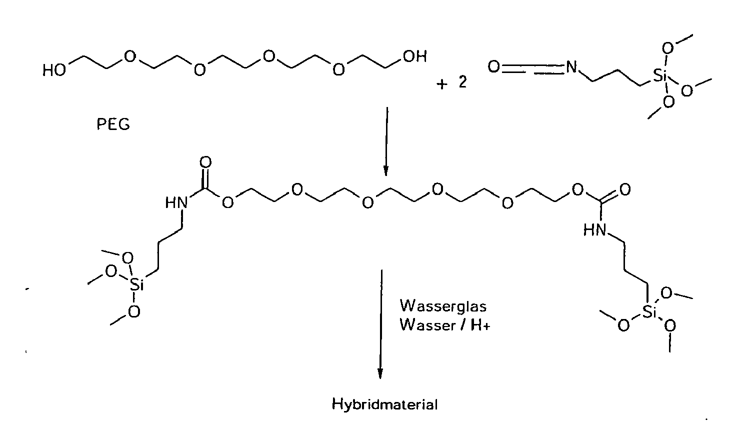

Bei diesem Verfahren werden die organischen Precursor mit anorganischen Gruppierungen funktionalisiert, um eine kovalente Verknüpfung mit anorganischen Precursorn zu ermöglichen.

In einer weiteren bevorzugten Ausführungsform werden anorganische Precursor, insbesondere Polydimethylsiloxane, mit organischen Gruppen funktionalisiert, welche die anorganischen Precursor hydrophiler gestalten und/oder eine kovalente Bindung der anorganischen Precursor ermöglichen. Bei diesem Herstellungsverfahren können beispielsweise Polydimethylsiloxane über Hydroxy-, Amino- oder Thiogruppen durch Derivatisierung mit hydrophilen Molekülen (z.B. Polyolen oder Zuckern) hydrophilisiert und wasserlöslich gemacht werden. Die Precursor können dann mit Vinylgruppen funktionalisiert werden. Anschließend ist eine Copolymerisation mit organischen Monomeren möglich. Geeignete Polydimethylsiloxanausgangsstoffe sind beispielsweise Hydroxyfunktionalisierte Polydimethylsiloxane, wie z.B. DowCorning Fluid 1238 mit einem M_{w} von ca. 6000, Amino-funktionalisierte Polydimethylsiloxane (wie z.B. DowCorning Fluid 2-8566) oder Methacryloyl-funktionalisierte Polydimethylsiloxane.

Als organische Precursor können sowohl hydrophile als auch hydrophobe Monomere eingesetzt werden. Bevorzugt werden die organischen Bestandteile ausreichend hydrophil gewählt, so dass die entstehenden Hydrogele einen Wassergehalt von ≥ 5 Gew.-% aufweisen. Ein Beispiel für eine solche Herstellungsweise ist im Folgenden dargestellt:

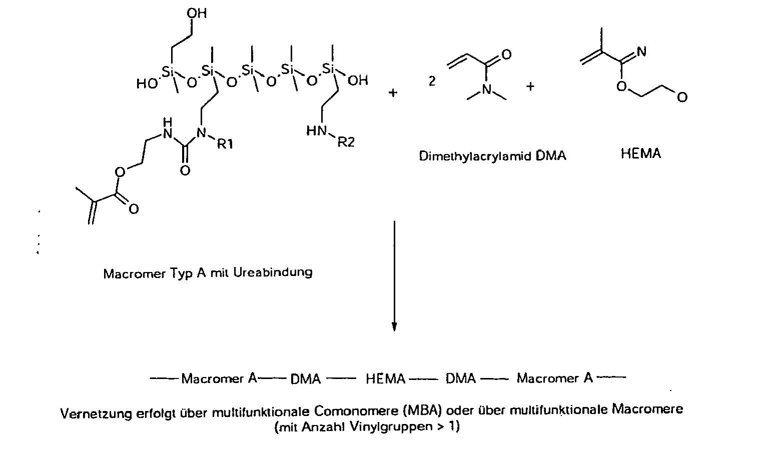

Der erfindungsgemäße Polymer-Elektrolyt umfasst vorzugsweise weiterhin wenigstens ein Salz, insbesondere augewählt aus der Gruppe Kaliumchlorid, Natriumchlorid, Lithiumchlorid, Kaliumnitrat, Natriumformiat, Lithiumacetat, Lithiumsulfat, Ammoniumchlorid, Methylammoniumchlorid, Dimethylammoniumchlorid, Trimethylammoniumchlorid sowie Mischungen davon. Besonders bevorzugt umfasst der Polymer-Elektrolyt Kaliumchlorid. Die Salzkonzentration und insbesondere die KCI-Konzentration im erfindungsgemäßen Polymer-Elektrolyten beträgt, bezogen auf die im Hybrid-Polymergel enthaltene Wassermenge, bevorzugt 0,5 bis 5 Mol/l insbesondere 1 bis 4 Mol/l und besonders bevorzugt 3 Mol/l.

Der Polymer-Elektrolyt kann zusätzlich ein organisches Lösungsmittel umfassen, beispielsweise ausgewählt aus der Gruppe bestehend aus Glycerin, Ethylenglykol, Methanol, Ethanol, n-Propanol, Isopropanol, Aceton sowie Mischungen davon.

Alternativ enthält der Polymer-Elektrolyt ein Gemisch eines organischen Lösungsmittels und einer wässrigen Lösung eines Salzes, wobei das Salz insbesondere als Suspension vorliegt.

Ein weiterer Gegenstand der vorliegenden Erfindung ist die Verwendung des oben beschriebenen Polymerelektrolyts in einer elektrochemischen Halbzelle. Der Polymerelektrolyt wird insbesondere als Festelektrolyt in einer elektrochemischen Halbzelle eingesetzt. Die elektrochemische Halbzelle ist vorzugsweise eine Halbzelle, welche für Sensoranwendungen geeignet und vorgesehen ist.

Die Erfindung betrifft auch eine elektrochemische Halbzelle, welche einen Polymerelektrolyten wie oben beschrieben umfasst. Bevorzugt handelt es sich um eine Referenz-Halbzelle, insbesondere um eine Referenz-Halbzelle, welche für Sensoranwendungen eingesetzt werden kann. Die Sensor-Halbzelle umfasst neben dem erfindungsgemäßen Polymerelektrolyten vorzugsweise eine Ableitung zweiter Art, beispielsweise ein Ag/AgCl-System. Besonders bevorzugt umfasst der Polymerelektrolyt in einer solchen Referenz-Halbzelle neben dem Nano-Hybridgel ein Salz, insbesondere KCI, wobei die Salzkonzentration so eingestellt ist, dass die Referenz-Halbzelle ein konstantes Potenzial aufweist. Besonders bevorzugt weist sie einen Salzgehalt von 0,3 bis 10 Mol/I auf.

Ein weiterer Gegenstand der vorliegenden Erfindung ist eine Referenzelektrode, die einen Polymer-Elektrolyten wie oben beschrieben umfasst.

Eine solche Referenzelektrode findet insbesondere Verwendung in einer elektrochemischen Halbzelle, bei der es sich um eine Referenzhalbzelle handelt. Aufgrund der Gelbeschaffenheit des erfindungsgemäßen Elektrolyten kann eine solche Halbzelle eine offene Flüssigkeitsverbindung mit dem umgebenden Medium aufweisen. Eine solche elektrochemische Halbzelle kann insbesondere als Komponente in einem potenziometrischen oder amperometrischen Sensor eingesetzt werden.

Figur 1 zeigt ein Kompositmaterial bestehend aus Kieselgel als anorganischer Phase und organischen Bereichen, welche über Silanlinker miteinander verknüpft sind.

Die Erfindung wird durch die folgenden Beispiele weiter erläutert.

### Beispiele

### Beispiel 1:

Nano-Hybridgel, ausgehend von Dimethylsiloxanprecursormolekülen. Vinylfunktionalisierung der Polydimethylsiloxane und anschließende Copolymerisation der funktionalisierten Polydimethylsiloxane mit hydrophilen organischen Monomeren

### a.) Funktionalisierung der Polydimethylsiloxane:

Ausgegangen wird von Polydimethylsiloxanen, wie z.B. dem DowCorning Fluid 1248, einem hydroxyfunktionalisierten Polydimethylsiloxan. Über die Hydroxyfunktionalität lässt sich diesem Molekül eine Vinylfunktionalität wie folgt aufderivatisieren:

| | |
|---|---|
| DowCorning Fluid 1248 | 45,76 g (7,5 mmol) |
| 2-Isocyanatoethylmethacrylat | 3,84 g (25 mmol) |
| Dibutylzinnlaurat Kat. | 13 µl (0,02 mmol) |

Die Reaktion bei 40 °C ist nach 6 Stunden beendet. Nach der Aufarbeitung resultiert eine klare ölige Substanz.

### b.) Herstellung des Nano-Hybridgels:

10 g der öligen Substanz wurden in 3 g Glycerin, 5 g Dimethylacrylamid, 1 g Hydroxyethylmethacrylat und 1 g Ethylenglycoldimethacrylat gelöst. Der Mischung wurden 10 g Wasser und KCI bis zu deren Sättigung zugesetzt.

Anschliessend gab man TEMED und Persulphatlösung zu und polymerisierte die Mischung bei 60 °C im Ofen.

### Resultat:

Es entsteht ein relativ hartes, klares Nano-Hybridgel mit sehr geringer Quellfähigkeit, welches wegen der fehlenden Silylfunktionalität nicht am Glas bindet. Ag/AgCl-Halbzellen mit diesem Polymer-Elektrolyt ergeben gegen eine ext. Ag/AgCl-Referenz (3M KCI) ein Potential von - 5 mV.

Unter entsprechendem Gegendruck sind diese Nano-Hybridgele bis zu einer Temperatur von 190 °C ohne sichtliche Zersetzung einsetzbar.

### Beispiel 2:

Nano-Hybridgel, ausgehend von der Vinylfunktionalisierung von Polykieselsäure und anschliessender Polymerisation/Copolymerisation mit organischen Monomeren.

| | |
|---|---|
| Tetraglyceryloxysilan (TGS): | 39,3 g |
| Triglyceryloxypropylmethacrylat (TGSPMA): | 2,5 g |
| Hydroxyethylmethacrylat (HEMA) | 13,2 g |
| deionisiertes Wasser: | 20 g |
| Dimethylacrylamid (DMA): | 15 g |
| Kaliumchlorid (KCI): | 12 g |
| Glycerin: | 48 g |

Lösen der Substanzen in Glycerin und Wasser. Die Polymerisierung mit TEMED und Persulphatlösung bei 40 °C führte zu einem festen Nano-Hybridgel. Bei Applikation eines genügenden Gegendruckes ist das Nano-Hybridgel bis 200 °C ohne sichtliche Zersetzung einsetzbar.

## Patentansprüche

1. Polymer-Elektrolyt für elektrochemische Halbzellen, umfassend ein Nano-Hybridgel,
**dadurch gekennzeichnet,**
**dass** das Nano-Hybridgel aus mindestens einem anorganischen Precursor und mindestens einem organischen Precursor gebildet ist und einen Wassergehalt von wenigstens 5 Gew.-%, bezogen auf das Gewicht des Nano-Hybridgels, aufweist.

2. Polymer-Elektrolyt, umfassend ein Nano-Hybridgel nach Anspruch 1,
**dadurch gekennzeichnet,**
**dass** der Anteil an anorganischen Precursorn ≥ 10 Gew.-%, bezogen auf das Gesamtgewicht der Precursor, beträgt.

3. Polymer-Elektrolyt, umfassend ein Nano-Hybridgel nach Anspruch 1 oder 2,
**dadurch gekennzeichnet,**
**dass** der Anteil an organischen Precursorn ≥ 10 Gew.-%, bezogen auf das Gesamtgewicht der Precursor, beträgt.

4. Polymer-Elektrolyt, umfassend ein Nano-Hybridgel nach einem der Ansprüche 1 bis 3,
**dadurch gekennzeichnet,**
**dass** die aus den Precursorn gebildeten Komponenten kovalent miteinander verbunden sind.

5. Polymer-Elektrolyt, umfassend ein Nano-Hybridgel nach einem der Ansprüche 1 bis 4,
**dadurch gekennzeichnet,**
**dass** die aus den Precursorn gebildeten Komponenten durch Van der Waals-Kräfte und/oder Wasserstoffbrückenbindungen miteinander verbunden sind.

6. Polymer-Elektrolyt, umfassend ein Nano-Hybridgel nach einem der vorhergehenden Ansprüche,
**dadurch gekennzeichnet,**
**dass** der anorganische Precursor Silicium, Titan oder/und Zirkonium umfasst.

7. Polymer-Elektrolyt, umfassend ein Nano-Hybridgel nach Anspruch 6,
**dadurch gekennzeichnet,**
**dass** ein anorganischer Precursor der Formel (I):
Si(OR¹)₄
oder der Formel (II):
R²-Si(OR¹)₃
eingesetzt wird, wobei R¹ Wasserstoff oder ein C₁-C₃₀-Kohlenwasserstoffrest ist, welcher nicht substituiert ist oder mit hydrophilen Resten substituiert sein kann, und
R² ein C₁-C₃₀-Kohlenwasserstoffrest ist, welcher nicht substituiert ist oder mit hydrophilen Resten oder funktionellen Resten substituiert sein kann.

8. Polymer-Elektrolyt, umfassend ein Nano-Hybridgel nach Anspruch 7,
**dadurch gekennzeichnet,**
**dass** R² wenigstens eine C=C-Doppelbindung aufweist.

9. Polymer-Elektrolyt, umfassend ein Nano-Hybridgel nach einem der vorhergehenden Ansprüche,
**dadurch gekennzeichnet,**
**dass** ein anorganischer Precursor der Formel (III)
HO-(SiR³₂-O-)ₙ-H
eingesetzt wird, worin
n eine ganze Zahl zwischen 1 und 100 ist,
R³ Wasserstoff oder eine C₁-C₃₀-Kohlenwasserstoffgruppe darstellt, welche gegebenenfalls substituiert sein kann oder/und Heteroatome enthalten kann.

10. Polymer-Elektrolyt, umfassend ein Nano-Hybridgel nach einem der vorhergehenden Ansprüche,
**dadurch gekennzeichnet,**
**dass** er weiterhin wenigstens ein Salz umfasst.

11. Polymer-Elektrolyt, umfassend ein Nano-Hybridgel nach Anspruch 10,
**dadurch gekennzeichnet,**
**dass** das Salz ausgewählt ist aus der Gruppe Kaliumchlorid, Natriumchlorid, Lithiumchlorid, Kaliumnitrat, Natriumformiat, Lithiumacetat, Lithiumsulfat, Ammoniumchlorid, Methylammoniumchlorid, Dimethylammoniumchlorid, Trimethylammoniumchlorid sowie Mischungen davon.

12. Polymer-Elektrolyt, umfassend ein Nano-Hybridgel nach einem der vorhergehenden Ansprüche,
**dadurch gekennzeichnet,**
**dass** er zusätzlich ein organisches Lösungsmittel umfasst.

13. Polymer-Elektrolyt, umfassend ein Nano-Hybridgel nach Anspruch 12,
**dadurch gekennzeichnet,**
**dass** das organische Lösungsmittel ausgewählt ist aus der Gruppe bestehend aus Glycerin, Ethylenglykol, Methanol, Ethanol, n-Propanol, Isopropanol, Aceton sowie Mischungen davon.

14. Polymer-Elektrolyt, umfassend ein Nano-Hybridgel nach einem der Ansprüche 11 bis 13,
**dadurch gekennzeichnet,**
**dass** das Salz als Suspension vorliegt.

15. Referenzelektrode, enthaltend einen Polymer-Elektrolyten, umfassend ein Nano-Hybridgel nach einem der Ansprüche 1 bis 14.

16. Elektrochemische Halbzelle,
**dadurch gekennzeichnet,**
**dass** sie einen Polymer-Elektrolyten nach einem der Ansprüche 1 bis 15 umfasst.

17. Elektrochemische Halbzelle nach Anspruch 16,
**dadurch gekennzeichnet,**
**dass** es sich um eine Referenz-Halbzelle handelt.

18. Halbzelle nach Anspruch 14 oder 15,
**dadurch gekennzeichnet,**
**dass** sie eine offene Flüssigkeitsverbindung zwischen dem Polymer-Elektrolyten und dem umgebenden Medium aufweist.

19. Verwendung eines Polymer-Elektrolyten nach einem der Ansprüche 1 bis 14 als Elektrolyt in einer elektrochemischen Halbzelle.

20. Verwendung einer elektrochemischen Halbzelle nach einem der Ansprüche 16 bis 18 als Komponente in einem potenziometrischen oder amperometrischen Sensor.
